# EUROPÄISCHE PATENTSCHRIFT

(11) **EP 0 734 467 B1**
(45) Veröffentlichungstag und Bekanntmachung des Hinweises auf die Patenterteilung: **18.09.2002**
(21) Anmeldenummer: 95936498.5
(22) Anmeldetag: 14.10.1995
(51) Int. Cl.: D06N 7/00, D06N 3/04, D06N 3/18, B32B 27/12

(54) **BAHNENFÖRMIGES FLEXIBLES FLÄCHENMATERIAL AUS EINEM HALOGENFREIEN KUNSTSTOFF**
WEB-TYPE FLEXIBLE PLANAR MATERIAL MADE FROM A SYNTHETIC MATERIAL CONTAINING NO HALOGEN COMPOUNDS
MATERIAU PLAN FLEXIBLE EN FORME DE FEUILLE CONTINUE EN MATIERE PLASTIQUE EXEMPTE DE COMPOSES HALOGENES

(30) Priorität: 17.10.1994 DE 4438888
(43) Veröffentlichungstag der Anmeldung: 02.10.1996
(73) Patentinhaber: debolon dessauer bodenbeläge GmbH, D-06846 Dessau (DE)
(72) Erfinder: KOPF, Manfred, D-06846 Dessau (DE); HELBIG, Dietmar, D-08262 Tannenbergsthal (DE)
(74) Vertreter: Burghardt, Rosemarie, Dipl.-Jur.
(86) Internationale Anmeldenummer: EP9504051
(87) Internationale Veröffentlichungsnummer: WO96012060

(56) Entgegenhaltungen:
- WO-A-95/03174
- DE-A- 1 619 313
- DE-A- 4 114 085
- DE-B- 1 062 203
- DE-C- 4 127 107
- GB-A- 1 150 375
- GB-A- 2 020 576
- FRANCK, BIEDERBICK: 'Kunststoff-Kompendium', VOGEL-BUCHVERLAG, DE

## Beschreibung

Die Erfindung wird im Bereich der Anwendung von aus einem Thermoplast hergestelltem Flächenmaterial mit einer verschleißfesten und insbesondere mit einer farblichen Musterung versehenen Oberfläche sowie bei der Herstellung von belagartigen Kunststoffbahnen, insbesondere von oberflächenverschleißfesten Fußbodenbelägen, wirksam und betrifft einen Mehrschichtaufbau eines Fußbodenbelages aus einem PVC-freien Kunstoff mit einer gestalteten Oberfläche und ein Verfahren zu -seiner Herstellung.

Als Ausgangsmaterial für Fußbodenbeläge aus einem Kunststoff hat sich Polyvinylchlorid, abgekürzt als PVC bekannt, als ein Thermoplast angeboten, der unter Zusatz eines Weichmachers als PVC-weich unter Verwendung von Füllstoffen zu einem homogenen, bahnenförmigen Fußbodenbelag verarbeitet wird. Die guten Eigenschaften dieses Materials, das pulverförmig als geschmacks- und geruchsloses Produkt als Einsatzmaterial Verwendung findet, bestehen darin, daß es schwer entflammbar ist, ein geringes Wasseraufnahmevermögen und gute elektrische Isoliereigenschaften aufweist. Weiterhin zeichnet sich das PVC durch gute Verarbeitungseigenschaften bei geringen Materialkosten aus. Verarbeitet zu Produkten sind diese gegen vielerlei im normalen Einsatzbereich als Fußbodenbelag vorkommende Reinigungs- und Lösungsmittel beständig und werden von diesen nicht angegriffen. Der auf der Basis von PVC hergestellte, aus Kunststoffbahnen bestehende Fußbodenbelag ist physiologisch einwandfrei und zeichnet sich durch eine verschleißfeste Oberfläche aus, wobei seine Abriebfestigkeit vom Füllstoffgehalt abhängig ist. Im Herstellungsverfahren läßt sich die Oberfläche farblich gestalten und mit einer Musterung versehen. Ferner lassen sich die auf PVC Basis hergestellten Kunststoffbahnen einfach durch Verschweißen zu großflächigen Gebilden verarbeiten.

Obgleich das Einsatzmaterial PVC für die Herstellung von Kunststoffbahnen auf Grund der Stoffeigenschaften über sehr gute Voraussetzung verfügt und auch für die Weiterverarbeitung, d.h. für das Verlegen von Kunststoffbahnen zu einem flächenabdeckenden Fußbodenbelag Vorteile aufweist, ist diesem Material wegen des hohen Chlorgehaltes ein die Umwelt belastender Mangel eigen. Die Kunststoffbahnen werden aus einem weichmacherhaltigen PVC hergestellt. Hierzu wird das PVC-Pulver vor der Verarbeitung mit einem Weichmacher z.B. zu einer Paste oder zu einer rieselfähigen Trockenmischung (Dryblend) vermischt, die dann durch Aufheizen zu einer homogenen Masse geliert. Als Weichmacher finden verschiedene Stoffe Anwendung, von denen mehr oder weniger gesundheitsschädliche Einflüsse ausgehen, wenn aus dem verarbeiteten Material Weichmacheranteile herausdiffundieren.

Um die genannten Mängel zu umgehen, sind z.B. verschiedene Vorschläge (nach DE 35 07 655 und EP 0 321 760), die gerichtet waren auf die Herstellung von Kunststoffbahnen aus weichmacherfreien Einsatzstoffen, entstanden. Mit den bekannt gewordenen Herstellungsverfahren sollten homogene Kunststoffbahnen erhalten werden, die hinsichtlich der Eigenschaften mit solchen, die auf PVC Basis herstellt worden waren, vergleichbare Eigenschaften aufweisen sollten. Die Zielsetzung konnte nur hinsichtlich des Einsatzes eines weichmacherfreien Endproduktes erfüllt werden. Allen mit diesen Verfahren hergestellten Erzeugnissen ist der Mangel eigen, daß eine vergleichbare farbliche Oberflächengestaltung zu solchen, die aus PVC Material bestehen, nicht erreicht werden kann und erhebliche Einschränkungen hinsichtlich der Verschleißfestigkeit sowie erhöhte Aufwendungen beim Verlegeprozeß in Kauf genommen werden müssen. Die Ursachen für diese Mängel liegen in den Stoffeigenschaften des verwendeten Einsatzmaterials. Nach den bekannten Lösungen ist als Bindemittel für Fußbodenbeläge in hohen Masseanteilen Ethylen-Vinylacetat-Copolymerisat (EVA) zum Einsatz gekommen. Die aus diesem Ausgangsmaterial hergestellten Bahnen oder Platten eignen sich nicht als Fußbodenbelag, da das Material zu weich ist. Für die Oberflächengestaltung von PVC freien homogenen Kunststoffbahnen für Fußbodenbeläge sind Verfahren bekannt geworden, mit denen die Musterung bildende Teile in das Materal eingepreßt oder eingeschmolzen werden.

Zur Herstellung eines PVC freien Fußbodenbelages aus EthylenVinylacetat-Copolymerisat ist nach der DE 41 27 107 und der EP A 0 528 194 ein Verfahren bekannt geworden, nach dem das Bindemittel Ethylen-Copolymerisat mit einer sehr geringen Dichte mit 1 Gew.% Zinksterat und einem sterisch gehinderten Phenol versetzt wird, das anschließend unter Wärmezufuhr zuerst vorgemischt und dann weiter durchgemischt wird. Diese plastifizierte Mischung wird anschließend zu einer Folie in einer Kalanderanlage ausgezogen. Diese Folie aus Ethylen-Copolymerisat wird mit einer in einem gleichen Verfahren hergestellten Folie aus Ethylen-Vinylacetat-Copolymerisat mit 8% Polyethylen Anteilen unter Wärmezufuhr dupliziert. Die nach diesem Verfahren gewonnene Mehrschichtfolie wird vorwiegend als durchscheinende Abdeckschicht für Fußbodenbelag verwendet. Die nach diesem Verfahren hergestellte Mehrschichtfolie ist als Fußbodenbelag nicht ausreichend geeignet , weil diese mit einem auf PVC Basis hergestellten Fußbodenbelag hinsichtlich der Möglichkeit einer farblichen und gemusterten Gestaltung nicht konkurrieren kann. So bleibt dieser Mehrschichtfolie nur eine Verwendung als Abdeckschicht für andere weichere Kunststoffbahnen. Da die Abriebfestigkeit dieser Mehrschichtfolie aber auch nicht für Fußbodenbeläge ausreichend ist, wird mit dieser vorgeschlagenen Lösung die mangelhafte Verschleißfestigkeit von PVC freien Fußbodenbelägen nicht beseitigt.

Nach der DE-A-10 62 203 (Bähr) ist ein Fußbodenbelag, der aus mehreren Schichten von verschiedenen Materialien besteht, bekannt, dessen Oberschicht aus einer transparenten Kunststoffolie besteht, wobei diese an der Unterseite oder eine Zwischenschicht an der Oberseite bedruckt ist. Die transparente Kunststoffolie aus Polyäthylen ist mittels eines Klebefilms und durch Pressen mit einer bedruckten Schicht aus imprägniertem Papier, Pappe, Gewebe oder Schichten aus anderen Materialien verbunden. Die hier offenbarte Art der Herstellung einer Verbindung zwischen dem imprägnierten Papier, Pappe, Gewebe oder den Schichten aus anderen Materialien und einer transparenten Kunststoffolie ist bekannt.

Durch die GB-A-2 020 576 (Glover) ist ein Fußbodenbelag bekannt, der hergestellt wird, indem durch Verpressen mittels heizbaren Platten eine Verbindung von erwärmten Plastikfolien (Plastics Sheets 14 and 16) mit einem Flächengebilde aus textilen Material entsteht (one or both of said press plates may be heated in order to effect bonding of the plastic sheets 14 and 16 to the fibres or filaments of the felt ,...").. Aus diesem Dokument ist entnehmbar, daß ein oder zwei Folienmaterialen erhitzt werden, um eine effektive Verbindung der Plastikfolien mit dem Fasermaterial der Platte zu erreichen. Es ist hier lediglich entnehmbar, daß ein textiles Material mit einem Plastik-Material, eispielsweise Polyvinylchlorid oder Polyäthylen, zu einem Flächengebilde verarbeitet wird, indem das folienförmige Plastikmaterial zuvor erwärmt wird.

In der GB-A-1 150 375 (Gregson) wird ein bahnenförmiges flexibles Flächenmaterial aus homogenem halogenfreiem Kunststoff für einen Fußbodenbelag beschrieben. Eine Information über die Art der Verbindung der Kunstoffschichten mit der Basisschicht ist hieraus nicht entnehmbar.

Nach der DE-A-41 14 085 (Tarkett Pegulan) ist ein PVC-freier Fußbodenbelag sowie ein Verfahren zu dessen Herstellung bekannt. Dieser besteht aus mehreren PVC-freien Kunststoff-Folien, die aus kalandierten Produkten hergestellt werden. Nach dieser Lehre werden diese Folien durch Duplieren bzw. Triplieren zwecks Erreichung einer bestimmten Belagstärke bei einer Verarbeitungstemperatur von zwischen 50 und 120° C miteinander verbunden, wobei zusätzlich diese mit einem Vlies oder Gewebeunterteil versehen sein können. Hieraus ist lediglich eine bekannte Lösung für eine Verbindung zwischen nicht fügbaren polymeren Schichten und eine zwischen einem Polymer und einem textilen Flächengebilde entnehmbar, die auf Adhäsionskraftwirkung beruht. Die Erwärmung der Oberfläche von Folien für den Aufbau des Fußbodenbelages dient lediglich zur Erhöhung der wirkenden Adhäsionskräfte.

Nach der DE-A-16 19 313 (Zellstoffwerk Waldhof) ist ein Verfahren zur Herstellung einer einseitigen Beschichtung von Materialien mit einer Folie bekannt. Die nach der Lehre aus diesem Dokument bekannte Beschichtung von Materialien erfolgt durch Aufkaschieren, wobei ein Vlies in einem Arbeitsgang mit einem in einem Extruder fließfähig gemachten Kunststoff, der mittels einer Breitschlitzdüse auf die Beschichtungsunterlage aufgebracht wird und sich als erwärmte Kunststoffschicht dort auflegt und damit diese beschichtet. Anschließend wird im Bedarfsfall eine weitere Folie auf die erwärmte Kunststoffschicht aufgebracht und über eine Kaschierabrollung eine Polyäthylenfolie dem zu beschichtenden Material derart zugeführt wird, daß die Folie mit der noch heißen Beschichtung eine feste Verbindung eingeht.

Obgleich viele verschiedene Verfahren zur Oberflächengestaltung von bahnförmigen Gebilden aus PVC freiem Kunststoff für Fußbodenbeläge bekannt geworden sind, bleiben die farblichen Strukturen der danach hergestellten Produkte nicht scharf begrenzt. Mit diesen bekannten Herstellungsverfahren zur Oberflächengestaltung sind gleichzeitig keine befriedigenden Ergebnisse hinsichtlich der Abrieb- und Kratzfestigkeit dieser Kunststoffbahnen erreicht worden.

Das Ziel der Erfindung besteht einerseits in der Vermeidung einer nicht völlig auszuschließenden Gesundheitsgefährdung und einer Umweltgefahr, die bei der Verwendung bzw. dem Einsatz von weichmacherhaltigem, auf der Basis von PVC Einsatzstoffen hergestelltem, bahnförmigem Fußbodenbelag gegeben ist, und andererseits, bei einer Verwendung anderer chlorverbindungsund weichmacherfreier Ausgangsstoffe sowohl in der Beibehaltung der positiven Eigenschaften von auf PVC-Basis her-gestellten Kunststoffbahnen bezüglich der Verschleißfestigkeit, der Farb- und Motivgestaltung und der günstigen Verwendungsvoraussetzungen, d.h. der positiven Möglichkeiten beim Verlegen, und besteht darüber hinausgehend, bei dem Einsatz chlorverbindungsfreier Kunststoffe, in der Sicherung eines hohen Gebrauchswertes von Flächengebilden für Fußbodenbeläge bezüglich des Planverhaltens sowie der Verlegevoraussetzungen und zusätzlich zur erforderlichen Verschleißfestigkeit in einer hohen Widerstandsfestigkeit gegenüber Druck- und Zugbelastungen.

Der Erfindung liegt die Aufgabe zugrunde, ein aus chlorfreien Kunststoffen bestehendes flexibles bahnenförmiges, eine Musterungsgestaltung aufweisendes Flächenmaterial mit einer verschleißfesten Oberfläche, insbesondere für Fußbodenbeläge, bestehend aus einem Verbund aus mindestens einer bahnenförmigen homogenen Polymerschmelze und einem flächenförmigen Fasermaterial, das eine Oberflächengestaltung z.B. hinsichtlich eines Musters und der einsetzbaren Farben zuläßt, und ein energiesparendes Verfahren zur Herstellung eines bahnenförmigen heterogenen Flächenmaterials zu entwickeln.

Diese Aufgabe wurde, wie in den Ansprüchen beschrieben, gelöst.

Die Verschleißschicht des bahnenförmigen flexiblen Flächenmaterials weist zur Gestaltung der Oberfläche eine vorzugsweise durch eine thermoplastische Verformung entstandene, reliefartige Struktur auf.

Die Basisschicht und die Mittelschicht bestehen jeweils aus einem faserhaltigen Flächengebilde aus darin geordnet oder ungeordnet liegenden, textilen oder/und mineralischen Fasern, wobei die Basisschicht als Haftbrücke zwischen dem Flächenmaterial und einer Verlegeebene und die Mittelschicht als Haftbrücke zwischen zwei mit den bisher bekannten technischen Mitteln nicht fügbaren Polymerschichten dient.

Zur Sicherung der Abriebfestigkeit besteht die Verschleißschicht aus einem Gemisch von einer oder mehreren Olefinkomponenten und einer oder mehreren thermoplastischen Elastomerkomponenten, wobei die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund der Verschleißschicht enthalten sind.

Für die farbliche Gestaltung und Musterung des Flächenmaterials ist die Innenoberfläche der Basisschicht oder die der Mittelschicht mit einem im Druckverfahren hergestellten raster-/bzw. teilflächenförmigen Auftrag aus in einem thermoplastischen Bindemittel enthaltenen, organischen oder/und anorganischen Farbpigmenten überzogen.

Da sich das aus PVC-freiem Polymer bestehende Flächenmaterial auf einer Verlegeebene nicht rutschfest, z.B. durch Verkleben verlegen läßt, ist nach einem weiteren erfinderischen Merkmal das bahnenförmige flexible Flächenmaterial mit einer aus einem faserhaltigen Flächengebilde bestehenden Basisschicht versehen, die als Haftbrücke zwischen dem Flächenmaterial und der Verlegeebene des Fußbodenbelages ausgebildet ist.

Weiterhin ist zwischen zwei homogenen nicht verbundfähigen PVC-freien Polymerschichten eine als Haftbrücke ausgebildete, flächenförmige, vorwiegend aus Fasermaterial bestehende Mittelschicht vorgesehen.

Weiterhin wurde die Aufgabe, ein Verfahren zur Herstellung von hier vorgeschlagenen, erfindungsgemäß ausgebildeten Flächenmaterialien zu entwickeln, wie in den Ansprüchen beschrieben gelöst.

Innerhalb der Verfahren wird als Verfahrensschritt die Basisschicht oder die Mittelschicht vor Zuführung mit einer Fügemechanik in den Fügespalt zwischen zwei hierzu vorgesehenen Fügemitteln in einem Druckverfahren unter Einsatz von in einem thermoplastischen Polymer als Bindemittel eingemischten, organischen oder/und anorganischen Farbpigmenten, mit einer aus farbigen Motiven bestehenden Musterung raster- oder teilflächenförmig bedruckt. Als Druckverfahren kommen dabei das Rotationstiefdruckverfahren, das Rotationssiebdruckverfahren oder das Thermodruckverfahren zum Einsatz. Während der Herstellung des Flächenmaterials wird durch das dem Fügeespalt zugeführte, erwärmte, d.h. sich im Zustand der thermoplastische Schmelze befindende polymere Flächengebilde die mit einem Motiv bedruckte Basisschicht bzw. Mittelschicht erwärmt und dadurch das für die Druckfarben als Bindemittel verwendete thermoplastische Polymer angeschmolzen und damit haftvermittelnd in die formschlüssige Verbindung zwischen der Basisschicht bzw. der Mittelschicht und dem polymeren Pächengebilde integriert.

Mit dem erfindungsgemäß vorgeschlagenen Aufbau eines flexiblen, bahnenförmigen Flächenmaterials aus chlorverbindungsfreien Kunststoffen, insbesondere für den Einsatz als Fußbodenbelag, liegt ein Flächenmaterial vor, das einerseits auf Grund des weiterhin erfindungsgemäß gestalteten Herstellungsverfahrens mit geringen Energiekosten und andererseits durch die Verwendung billiger Einsatzmaterialien kostengünstig hergestellt werden kann und gleichzeitig eine hohe Qualität aufweist, die die bekannten positiven Eigenschaften von auf PVC Basis hergestellten Fußbodenbelägen hinsichtlich des Planverhaltens, der Abriebfestigkeit der Oberfläche des Fußbodenbelages, der Widerstandsfestigkeit gegenüber Zug- und Druckbelastungen und gegenüber in Reinigungsmitteln enthaltenen Lösungsmitteln übertrifft. Die hohe Zug- und Druckbelastung sowie das gute Planverhalten des Flächenmaterials sind zurückzuführen auf die flächenförmige(n) Faserschicht(en), die im Verbund als Flächenbewehrung wirk(en). Letztlich besteht eine große farbliche und durch farbliche Muster gekennzeichnete Gestaltungsmöglichkeit. Weiterhin ist durch den erfindungsgemäßen Aufbau die Möglichkeit einer mit Effekten versehenen plastischen Motivgestaltung gegeben.

Die Erfindung soll nachfolgend an einem Ausführungsbeispiel näher erläutert werden. In der zugehörigen Zeichnung zeigen:

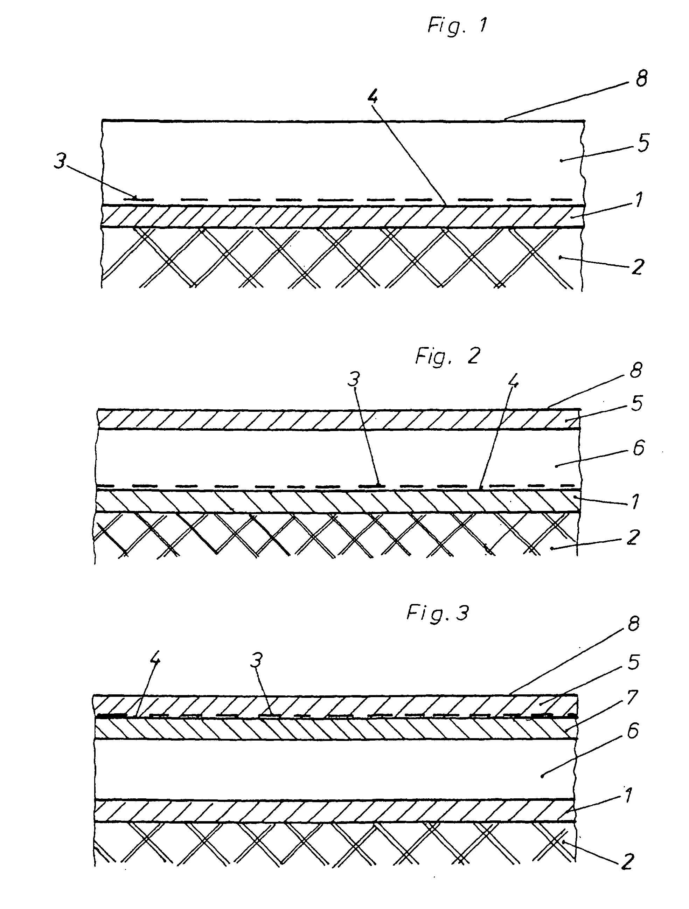

- Fig. 1: einen Aufbau eines erfindungsgemäß gestalteten Flächenmaterials, bestehend aus einer faserhaltigen Trägerschicht und einer aus dem in den Ansprüchen bzw. oben definierten PVC-freien Polymer bestehenden Verschleißschicht in Schnittdarstellung,
- Fig. 2: eine Schnittdarstellung eines erfindungsgemäß ausgebildeten Flächenmaterials, bestehend aus einer faserhaltigen Basisschicht, einer polymeren Zwischenschicht und einer polymeren Verschleißschicht jeweils aus dem in den Ansprüchen bzw. oben definierten PVC-freien Material,
- Fig. 3: eine Schnittdarstellung eines erfindungsgemäß ausgebildeten Flächenmaterials, bestehend aus einer faserhaltigen Basisschicht, einer polymeren Zwischenschicht, einer faserförmigen Mittelschicht und einer in den Ansprüchen bzw. oben definierten polymeren Verschleißschicht,

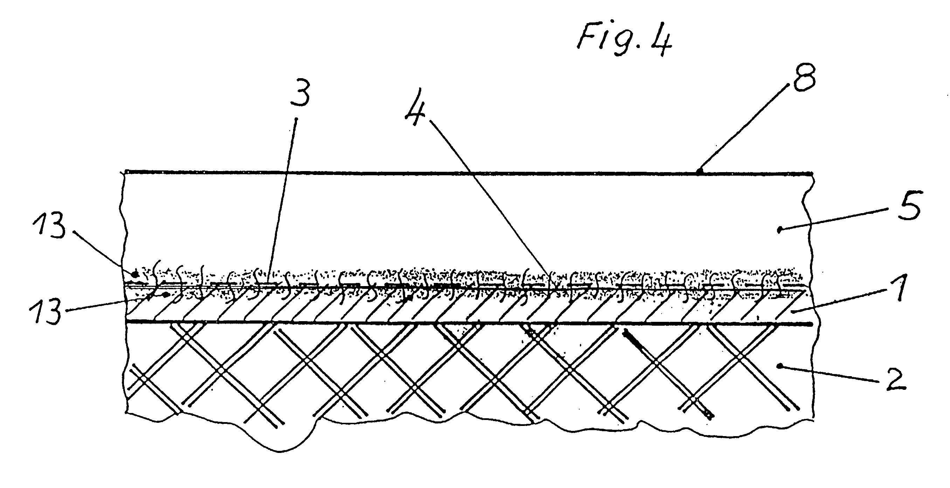

- Fig. 4: eine Schittdarstellung wie in Fig. 1 mit dargestelltem Formschlußbereich,

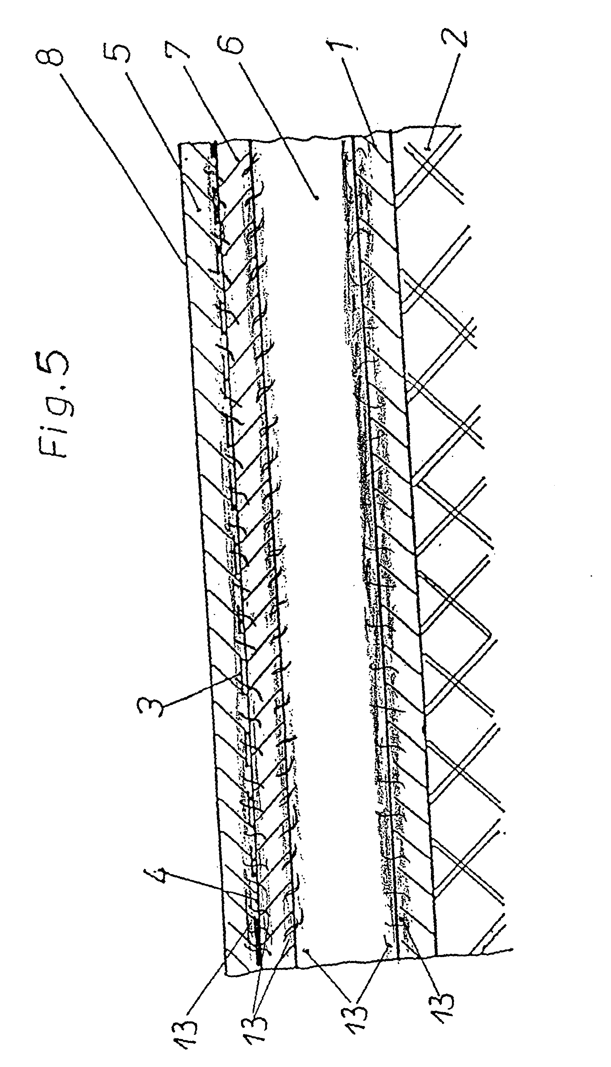

- Fig. 5: eine Schnittdarstellung wie in Fig. 3 mit dargestellten Formschlußbereichen,

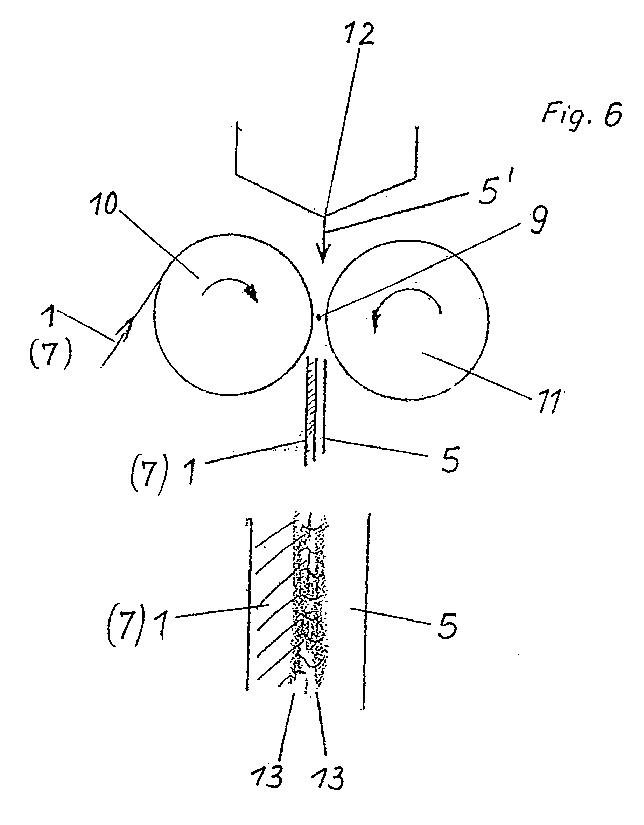

- Fig. 6: Prinzipdarstellung des einrichtungsseitigen Aufbaues zur Herstellung eines erfindungsgemäßen Zweischichtsystems nach Fig. 1, bestehend aus einer faserförmiger Basisschicht in den Ansprüchen bzw. oben definierten und polymerer Verschleißschicht,

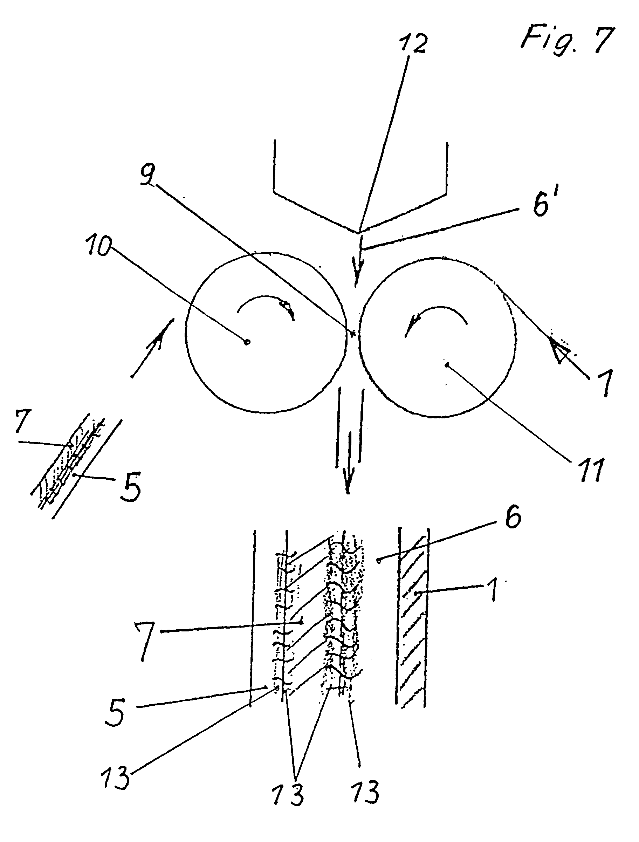

- Fig. 7: Prinzipdarstellung des einrichtungsseitigen Aufbaues zur Herstellung eines erfindungsgemäßen Mehrschichtsystems nach Fig. 3, bestehend aus einer faserförmiger Basisschicht, einer faserförmigen Mittelschschicht einer polymerer Verschleißschicht wie oben bzw. in den Ansprüchen definiert und einer polymeren Zwischenschicht.

Ein bahnenförmiges flexibles Flächenmaterial, das insbesondere für einen ein- oder mehrfarbig, gemusterten oder ungemusterten Fußbodenbelag verwendet wird, weist einen Mehrschichtenaufbau auf. Unabhängig von dem vom Verwendungszweck abhängigen Schichtenaufbau ist als unterste Schicht stets eine faserförmige Basisschicht 1, die aus geordneten oder ungeordneten textilen und/oder mineralischen Fasern besteht, vorgesehen, die einerseits der Haftvermittlung zur Auslegefläche 2 des Flächenmaterials dient und andererseits mit einer homogenen, PVC-freien, thermoplastischen Polymerschicht formschlüssig verbunden ist. In dem so vorliegenden zweischichtigen Aufbau ist die faserförmige Basisschicht 1 der Träger für eine mit ein- oder mehrfarbigen Motiven versehene Musterung/Gestaltung des Flächenmaterials, wobei diese in einem Druckverfahren hergestellt ist und aus einem raster-/bzw. teilflächenförmigen, aus in einem thermoplastischen Bindemittel enthaltenen anorganischen oder/und organischen Farbpigmenten bestehenden, auf eine Innenoberfläche 4 der Basisschicht 1 aufgebrachten Auftrag 3 gebildet ist. Die aus einem PVC-freien Kunststoff wie oben bzw. in den Ansprüchen definiert bestehende homogene thermoplastische Polymerschicht ist hier als transparente oder durchscheinende Verschleißschicht 5 ausgebildet. Diese Verschleißschicht 5 besteht zur Erhöhung der Abriebfestigkeit aus einem Gemisch von einer oder mehreren Olefinkomponente(n) und einer oder mehreren thermoplastischen Elastomerkomponente(n). In diesem Gemisch bilden die Molekülgruppen der Stoffkomponenten ein Durchdringungsnetzwerk, in dem die thermoplastischen Elastomerkomponenten als diskontinuierliche Phase und die Olefinkomponeten als kontinuierliche Phase im Netzwerkverbund enthalten sind.

Bei einem dreischichtigen Aufbau des Flächenmaterials, der vorwiegend bei einer einfarbigen Gestaltung gewählt wird, ist zwischen der Verschleißschicht 5 und der faserförmigen Basisschicht 1 eine aus PVC-freiem Kunststoff bestehende thermoplastische Polymerschicht als Zwischenschicht 6 vorgesehen. Diese kann sowohl einfarbiger Art als auch in sich gemustert sein. Sofern die für die Verschleißschicht 5 und die Zwischenschicht 6 als Materialien eingesetzten PVC-freien Kunststoffe sich mit den bekannten Mitteln auf Grund ihrer Materialzusammensetzungen nicht verbinden/fügen lassen, ist zwischen der polymeren Verschleißschicht 5 und der polymeren Zwischenschicht 6 eine, eine haftvermittelnde Funktion übernehmende faserförmige Mittelschicht 7, die im Aufbau der der Basisschicht 1 entspricht, vorgesehen. Die faserförmige Mittelschicht 7 wird in gleicher Weise wie die faserförmige Basisschicht 1 - als Träger einer aus ein- oder mehrfarbigen Motiven bestehenen Gestaltung/Musterung im Mehrverbund eingesetzt.

Die Verschleißschicht 5 ist bei Bedarf auf ihrer Oberfläche 8 mit einer vorzugsweise durch eine thermoplastische Verformung entstandenen reliefartigen Struktur (nicht dargestellt) versehen.

Die Herstellung des bahnenförmigen flexiblen Flächenmaterials erfolgt vorzugsweise in herkömmlichen Kalanderwalzwerken, wobei bei einem zweischichtigen Verbund des Flächenmaterials einem Walzenspalt 9 zwischen zwei Kalanderwalzen 10; 11 einerseits das faserförmige Material einer Basisschicht 1 oder einer Mittelschicht 7 und andererseits gleichzeitig ein polymeres Flächengebilde einer Verschleißschicht 5 wie oben bzw. in den Ansprüchen definiert oder Zwischenschicht 6 im Zustand der thermoplastischen Schmelze 5'; 6', die unmittelbar zuvor aus in einem nicht dargestellten Extruder aufgescholzenem Polymer über eine Breitschlitzdüse 12 hergestellt worden ist, zugeführt werden. Durch eine durch die Kalanderwalzen 10; 11 einerseits auf die Basisschicht 1 oder Mittelschicht 7 und andererseits auf das jeweilige polymere Flächengebilde im Zustand der polymeren Schmelze 5'; 6' ausgeübte Anpreßkraft wird jeweils eine faserförmige Schicht mit dem polymeren Flächengebilde formschlüssig verbunden. Bei dem Durchlaufen der Basisschicht 1 bzw. der Mittelschicht 7 durch den Walzenspalt 9 wird die polymeren Schmelze 5'; 6' in die Faserstrukturen des faserförmigen Materials der Basisschicht 1 bzw. der Mittelschicht 7 eingepreßt und es entsteht jeweils ein den Formschluß begründender dreidimensionaler, Fasern und Polymer enthaltender Formschlußbereich 13, der sich sowohl einerseits in die faserförmige Basisschicht 1 bzw. faserförmige Mittelschicht 7 und andererseits in die polymere Verschleißschicht 5 bzw. in die polymere Zwischenschicht 6 erstreckt. Die Herstellung von mehrschichtigen Verbunden eines Flächenmaterials erfolgt in Verfahrensanalogie.

## Patentansprüche

1. Bahnenförmiges flexibles Flächenmaterial (1; 5) aus einem halogenverbindungsfreien Kunststoff mit einer verschleißfesten Oberfläche (5), insbesondere für einen gemusterten Fußbodenbelag, ***dadurch gekennzeichnet,* daß** das Flächenmaterial (1; 5) einen heterogenen Aufbau aufweist und aus mehreren, mindestens einer homogenen PVC-freien Polymerschicht (5) und einer als Haftbrücke wirksam werdenden, aus einem faserhaltigen Flächengebilde bestehenden Basisschicht (1) aufgebaut ist, wobei in die Faserstruktur der Basisschicht (1) PVC-freies Polymer aus der Polymerschicht (5) eingepreßt ist und die aus einem faserhaltigen Flächengebilde bestehende Basisschicht (1) mit einer bestimmten, aus farbigen Motiven bestehenden Musterung des Flächenmaterials (1; 5) versehen ist und die Polymerschicht (5) als transparente oder durchscheinende aus einem Gemisch von einer oder mehreren Olefinkomponenten und einer oder mehreren thermoplastischen Elastomerkomponenten bestehende Verschleißschicht (5) ausgebildet ist, wobei die Molekülgruppen der Olefin- und Elastomerkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

2. Bahnenförmiges flexibles Flächenmaterial (1; 5; 6) aus einem halogenverbindungsfreien Kunststoff mit einer verschleißfesten Oberfläche (5), insbesondere für einen gemusterten Fußbodenbelag, ***dadurch gekennzeichnet,* daß** das Flächenmaterial (1; 5; 6) einen heterogenen Aufbau aufweist und aus mehreren, mindestens zwei homogenen PVC-freien Polymerschichten (5; 6) und einer als Haftbrücke wirksam werdenden, aus einem faserhaltigen Flächengebilde bestehenden Basisschicht (1) aufgebaut ist, wobei in die Faserstruktur der Basisschicht (1) Polymer aus der aus PVC-freiem Polymer bestehenden Zwischenschicht (6) eingepreßt ist und die aus einem faserhaltigen Flächengebilde bestehende Basisschicht (1) mit einer bestimmten, aus farbigen Motiven bestehenden Musterung des Flächenmaterials (1; 5; 6) versehen ist und die polymere Zwischenschicht (6) und Verschleißschicht (5) als transparente oder durchscheinende Schichten ausgebildet sind, wovon die transparente Zwischenschicht (6) vorwiegend farbig getönt und die den heterogenen Aufbau abschließende Schicht als eine transparente oder durchscheinende aus einem Gemisch von einer oder mehreren Oiefinkomponenten und einer oder mehreren thermoplastischen Elastomerkomponenten bestehende Verschleißschicht (5) ausgebildet ist, wobei die Molekülgruppen der Olefin- und Elastomerkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

3. Bahnenförmiges flexibles Flächenmaterial (1; 5; 6) aus einem halogenverbindungsfreien Kunststoff mit einer verschleißfesten Oberfläche, insbesondere für einen farbigen oder farbig strukturierten Fußbodenbelag, ***dadurch gekennzeichnet,* daß** das Flächenmaterial (1; 5; 6) einen heterogenen Aufbau aufweist und aus mehreren, mindestens zwei homogenen PVC-freien Polymerschichten und einer als Haftbrücke wirksam werdenden, aus einem faserhaltigen Flächengebilde bestehenden Basisschicht (1) aufgebaut ist, wobei in die Faserstruktur der Basisschicht (1) Zwischenschicht (6) eingepreßt ist und eine der Polymerschichten als eine einfarbige, einfarbig und in sich gemusterte oder farbig strukturierte Zwischenschicht (6) und die andere, den heterogenen Aufbau des Flächenmaterials abschließende Schicht als eine von einer oder mehreren Olefinkomponenten und einer oder mehreren thermoplastischen Elastomerkomponenten bestehende Verschleißschicht (5) ausgebildet ist, wobei die Molekülgruppen der Olefin- und Elastomerkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

4. Bahnenförmiges flexibles Flächenmaterial nach Anspruch 2 und 3, ***dadurch gekennzeichnet,* daß** zwischen einer homogenen nicht verbundfähigen PVC-freien Polymerschicht (5) und einer aus nicht verbundfähigem PVC-freien Polymer bestehenden Zwischenschicht (6) eine als Haftbrücke ausgebildete, aus einem faserhaltigen Flächengebilde bestehende Mittelschicht (7) vorgesehen ist, wobei in die Faserstruktur der als Haftbrücke wirkenden Mittelschicht (7) einerseits Polymer aus der aus PVC-freiem Polymer bestehenden Zwischenschicht (6) und andererseits Polymer aus der PVC-freien Polymerschicht (5) eingepreßt ist.

5. Bahnenförmiges flexibles Flächenmaterial nach Anspruch 1, 2 oder 3, ***dadurch gekennzeichnet,* daß** das faserhaltige Flächengebilde aus darin geordnet oder ungeordnet liegenden, textilen oder/und mineralischen Fasern besteht.

6. Bahnenförmiges flexibles Flächenmaterial nach Anspruch 1, 2, 4 und 5, ***dadurch gekennzeichnet,* daß** die Musterung des Flächenmaterials aus einem im Druckverfahren hergestellten raster-/bzw. teilflächenförmigen Auftrag (3) aus in einem thermoplastischen Bindemittel enthaltenen, organischen oder/und anorganischen Farbpigmenten auf einer Innenoberfläche (4) der Basisschicht (1) oder der Mittelschicht (7) besteht.

7. Bahnenförmiges flexibles Flächenmaterial nach Anspruch 1 bis 6, ***dadurch gekennzeichnet,* daß** die aus einem faserhaltigen Flächengebilde bestehende Basisschicht (1) als eine Haftbrücke zwischen der Polymerschicht (5) des Flächenmaterals (1; 5) bzw. der Zwischenschicht (6) des Flächenmaterials (1; 5; 6) und einer Verlegeebene (2) des Fußbodenbelages ausgebildet ist.

8. Bahnenförmiges flexibles Flächenmaterial nach Anspruch 3 bis 7, ***dadurch gekennzeichnet,* daß** zwischen zwei homogenen nicht verbundfähigen PVC-freien Polymerschichten (3; 6) eine als Haftbrücke ausgebildete dienende flächenförmige, vorwiegend aus Fasermaterial bestehende Mittelschicht (7) vorgesehen ist.

9. Bahnenförmiges flexibles Flächenmaterial nach Anspruch 2, 3 bis 8, ***dadurch gekennzeichnet,* daß** die zwischen zwei homogenen nicht verbundfähigen PVC-freien Polymerschichten (3; 6) vorgesehene, als Haftbrücke dienende flächenförmige, vorwiegend aus Fasermaterial bestehende Mittelschicht (7) als Träger für die aus ein- oder mehrfarbigen Motiven bestehende Musterung ausgebildet ist.

10. Verfahren zur Herstellung eines heterogenen Flächenmaterials, bestehend aus mindestens einer homogenen, halogenverbindungsfreien Kunststoffschicht und einer als Gestaltungsschicht und oder als Haftbrücke zu einer Verlegeebene ausgebildeten und aus Fasermaterial bestehenden Basisschicht, ***dadurch gekennzeichnet,* daß** ein Polymer aufgeschmolzen wird, aus dieser Polymerschmelze über eine Formgebungseinrichtung (12) ein aus einem polymeren Schmelzefilm (5' bzw. 6') bestehendes Flächengebilde mit einer definierten Dicke hergestellt wird und dieses im Zustand der thermoplastischen Schmelze (5' bzw. 6') gleichzeitig mit der vorzugsweise aus einem Faservlies bestehenden und auf der dem thermoplastischen polymeren Flächengebilde (5 bzw. 6) zugewandten Innenoberfläche (4) musterlosen oder mit einem Muster versehenen als Haftbrücke zur Verlegeebene (2) dienenden Basisschicht (1) oder einer vorwiegend aus Faservlies bestehenden Mittelschicht (7) in einen Fügespalt (9) eines aus mindestens zwei Fügemitteln (10; 11) bestehenden Preßwerkes eingeführt wird und unter der Einwirkung einer linien- oder flächenförmig erzeugten, auf die Basisschicht (1) bzw. auf die Mittelschicht (7) und gleichzeitig auf das polymere Flächengebilde (5 bzw. 6) im Zustand der polymeren Schmelze (5' bzw. 6') ausgeübten Anpreßkraft durch Einpressen der faserförmigen Basisschicht (1) bzw. der faserförmigen Mittelschicht (7) in die filmartige, flächenförmige thermoplastische polymere Schmelze (5' bzw. 6') ein formschlüssiger Haftverbund hergestellt wird, der anschließend abgekühlt wird, wobei die polymere Schmelze (5') aus einem Gemisch von einer oder mehreren Olefinkomponenten und einer oder mehreren thermolastischen Elastomerkomponenten besteht, und die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

11. Verfahren zur Herstellung eines heterogenen Flächenmaterials, bestehend aus mindestens zwei homogenen, halogenverbindungsfreien Kunstoffschichten und einer als Gestaltungsschicht und oder als Haftbrücke zu einer Verlegeebene ausgebildeten und aus Fasermaterial bestehenden Basisschicht, ***dadurch gekennzeichnet,* daß** ein Polymer aufgeschmolzen wird, aus dieser Polymerschmelze über eine Formgebungseinrichtung (12) ein aus einem polymeren Schmelzefilm (6') bestehendes Flächengebilde mit einer definierten Dicke hergestellt wird und dieses im Zustand der polymeren thermoplastischen Schmelze gleichzeitig mit der vorzugsweise aus einem Faservlies bestehenden und auf der der polymeren Schmelzefläche zugewandten Innenoberfläche (4) musterlosen oder mit einem Muster versehenen Basisschicht (1) in einen Fügespalt (9) eines aus mindestens zwei Fügemitteln (10; 11) bestehenden Preßwerkes eingeführt wird und unter der Einwirkung einer linienoder flächenförmig erzeugten, auf die Basisschicht (1) und auf das polymere Flächengebilde (6) ausgeübten Anpreßkraft durch Einpressen der faserförmigen Basisschicht (1) in die Oberfläche des thermoplastischen polymeren Flächengebildes ein formschlüssiger Haftverbund hergestellt wird, und dieser darauffolgend in gleicher Verfahrenstechnik mit einer weiteren Polymerschicht (5) versehen wird, wobei die zweite Polymerschicht im Zustand der thermoplastischen Schmelze (5') auf die erste im thermoplastischen Zustand aufgebracht und anschließend dieser Haftverbund abgekühlt wird, wobei die polymere Schmelze (5') aus einem Gemisch von einer oder mehreren Olefinkomponenten und einer oder mehreren thermoplastischen Elastomerkomponenten besteht, und die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

12. Verfahren zur Herstellung eines heterogenen Flächenmaterials, bestehend aus mindestens zwei homogenen, halogenverbindungsfreien Kunstoffschichten und einer als Gestaltungsschicht und einer als Haftbrücke zu einer Verlegeebene ausgebildeten und aus Fasermaterial bestehenden Basisschicht, ***dadurch gekennzeichnet,* daß** die erste homogene PVC-freie folienartige Polymerschicht als Zwischenschicht (6) in bekannter Art aus einer Polymerschmelze hergestellt wird und diese flächenförmig ausgeformte Schmelze (6') einseitig mit einer als Haftbrücke zur Verlegeebene (2) dienenden unbedruckten Basisschicht (1) und andererseits mit einer als Haftbrücke zwischen einer Zwischenschicht (6) und einer Verschleißschicht (5), die aus nicht fügbaren Polymern bestehen, dienenden faserförmigen und gestaltungsfähigen Mittelschicht (7) über eine Anpreßkraft ausübende Fügemittel (10; 11) formschlüssig verbunden wird, wobei auf der als Haftbrücke ausgebildeten faserförmigen Mittelschicht (7) anschließend eine weitere aus PVC-freiem Polymer bestehende, homogene Verschleißschicht (5), die mit gleicher Verfahrenstechnik aus einer Polymerschmelze (5') erzeugt, im Zustand der thermoplastischen Schmelze (5') aufgebracht und mittels eine Anpreßkraft ausübenden Fügemitteln (10; 11) formschlüssig mit dieser Haftbrücke verbunden und dieser Haftverbund anschließend abgekühlt wird, wobei die polymere Schmelze (5') aus einem Gemisch von einer oder mehreren Olefinkomponenten und einer oder mehreren thermoplastischen Elastomerkomponenten besteht, und die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

13. Verfahren zur Herstellung eines heterogenen Flächenmaterials, bestehend aus mindestens zwei homogenen, halogenverbindungsfreien Kunststoffschichten und einer als Gestaltungsschicht und einer als Haftbrücke zu einer Verlegeebene ausgebildeten und aus Fasermaterial bestehenden Basisschicht, ***dadurch gekennzeichnet,* daß** in einem getrennten Verfahren ein formschlüssiger Haftverbund zwischen einer als Haftbrücke dienenden, bedruckten Mittelschicht (7), und einer in einer bekannten Art aus einem homogenen PVC-freien Polymer bestehenden Schmelze (5') zu einem Flächengebilde ausgeformten Verschleißschicht (5) unter Einwirkung einer durch Fügemittel (10; 11) ausgeübten Kraft auf die Mittelschicht (7) und auf polymere Verschleißschicht (5) im thermoplastischen Zustand der Schmelze (5') hergestellt wird, und anschließend dieser zuvor aus der Verschleißschicht (5) und der als Haftbrücke zwischen zwei nicht fügbaren Polymerschichten (5; 6) dienenden Mittelschicht (7) gebildete zweischichtige Haftverbund gleichzeitig mit einer als Haftbrücke zur Verlegeebene (2) dienenden Basisschicht (1) einem Fügespalt (9) eines aus mindestens zwei Fügemitteln (10; 11) bestehenden Preßwerkes zugeführt wird, wobei gleichzeitig ein aus einer Polymerschmelze (6') in bekannter Weise hergestelltes, aus einer filmartigen Polymerschmelze bestehendes, polymeres Flächengebilde im Zustand der thermoplastischen Schmelze (6') zwischen dem zweischichtigen Haftverbund und der faserförmigen Basisschicht (1) eingebracht wird, wobei zwischen dieser und der Mittelschicht (7) des Haftverbundes einerseits und der Basisschicht (1) andererseits eine formschlüssige Verbindung hergestellt wird, wobei die polymere Schmelze (5') aus einem Gemisch von einer oder mehreren Olefinkomponenten und einer oder mehreren thermoplastischen Elastomerkomponenten besteht, und die Molekülgruppen der Stoffkomponenten ein Durchdringungsnetzwerk bilden, in dem die thermoplastischen Elastomerkomponenten als diskontinuierliche Phase und die Olefinkomponenten als die kontinuierliche Phase im Netzwerkverbund enthalten sind.

14. Verfahren zur Herstellung eines heterogenen Flächenmaterials nach Anspruch 10 bis 13, ***dadurch gekennzeichnet,* daß** die Basisschicht (1) oder die Mittelschicht (7) vor ihrer Zuführung in den Fügespalt 9 zwischen zwei hierzu vorgesehenen Fügemitteln (10; 11) in einem Druckverfahren unter Einsatz von in einem thermoplastischen Polymer als Bindemittel eingemischten organischen oder/und anorganischen Farbpigmenten mit einer aus farbigen Motiven bestehenden Musterung raster- oder teilflächenförmig bedruckt wird.

15. Verfahren zur Herstellung eines heterogenen Flächenmaterials nach Anspruch 10 und 13, ***dadurch gekennzeichnet,* daß** die Basisschicht (1) oder die Mittelschicht (7) im Rotationstiefdruckverfahren oder im Rotationssiebdruckverfahren oder Thermodruckverfahren mit einer einoder mehrfarbigen, aus Motiven bestehenden Musterung bedruckt wird.

16. Verfahren zur Herstellung eines heterogenen Flächenmaterials nach Anspruch 10 bis 13, ***dadurch gekennzeichnet,* daß** durch die dem Fügeespalt (9) in Form einer thermoplastischen Schmelze (5' oder 6') zugeführte und aus einem PVC-freien Polymer bestehende Polymerschicht (5) oder Zwischenschicht (6), die mit einem Motiv bedruckte Basisschicht (1) oder Mittelschicht (7) erwärmt wird und dadurch das für die Druckfarben als Bindemittel verwendete thermoplastische Polymer angeschmolzen und damit haftvermittelnd in die formschlüssige Verbindung zwischen der faserförmigen Basisschicht (1) bzw. der Mittelschicht (7) und der Polymerschicht (5) bzw. Zwischenschicht (6) integriert wird.

## Claims

1. A web-type flexible planar material (1; 5) made from a synthetic material containing no halogen compounds, having a wear-resistant surface (5), especially for a patterned floor covering, **characterised in that** the planar material (1; 5) has a heterogeneous structure and is constructed from several, at least one homogeneous PVC-free polymer layer (5) and a base layer (1) which becomes active as an adhesive bridge, consisting of a fibre-containing planar structure, wherein PVC-free polymer from the polymer layer (5) is pressed into the fibre structure of the base layer (1) and the base layer (1) consisting of a fibre-containing planar structure is provided with a particular pattern of the planar material (1; 5) consisting of colour motifs and the polymer layer (5) is constructed as a transparent or translucent wearing layer (5) consisting of a mixture of one or several olefin components and one or several thermoplastic elastomer components, wherein the molecular groups of the olefin or elastomer components form a penetration network in which the thermoplastic elastomer components are contained as the discontinuous phase and the olefin components are contained as the continuous phase in the network bond.

2. The web-type flexible planar material (1; 5; 6) made from a synthetic material containing no halogen compounds, having a wear-resistant surface (5), especially for a patterned floor covering, **characterised in that** the planar material (1; 5; 6) has a heterogeneous structure and is constructed from several, at least two homogeneous PVC-free polymer layers (5; 6) and a base layer (1) acting as an adhesive bridge, consisting of a fibre-containing planar structure, wherein polymer from the intermediate layer (6) consisting of PVC-free polymer is pressed into the fibre structure of the base layer (1) and the base layer (1) consisting of a fibre-containing planar structure is provided with a particular pattern of the planar material (1; 5; 6) consisting of colour motifs and the polymer intermediate layer (6) and wearing layer (5) are constructed as transparent or translucent layers wherefrom the transparent intermediate layer (6) is predominantly coloured and the layer completing the heterogeneous structure is constructed as a transparent or translucent wearing layer (5) consisting of a mixture of one or several olefin components and one or several thermoplastic elastomer components, wherein the molecular groups of the olefin and elastomer components form a penetration network in which the thermoplastic elastomer components are contained as the discontinuous phase and the olefin components are contained as the continuous phase in the network bond.

3. The web-type flexible planar material (1; 5; 6) made from a synthetic material containing no halogen compounds, having a wear-resistant surface, especially for a coloured or coloured structured floor covering, **characterised in that** the planar material (1; 5; 6) has a heterogeneous structure and is constructed from several, at least two homogeneous PVC-free polymer layers and a base layer (1) acting as an adhesive bridge, consisting of a fibre-containing planar structure, wherein the intermediate layer (6) is pressed into the fibre structure of the base layer (1) and one of the polymer layers is constructed as a single-colour, single-colour and inherently patterned, or coloured structured intermediate layer (6) and the other layer completing the heterogeneous structure of the planar material is constructed as a wearing layer (5) consisting of one or several olefin components and one or several thermoplastic elastomer components, wherein the molecular groups of the olefin and elastomer components form a penetration network in which the thermoplastic elastomer components are contained as the discontinuous phase and the olefin components are contained as the continuous phase in the network bond.

4. The web-type flexible planar material according to Claim 2 or 3, **characterised in that** between a homogeneous PVC-free polymer layer (5) not capable of bonding and an intermediate layer (6) consisting of PVC-free polymer not capable of bonding, there is provided a central layer (7) constructed as an adhesive bridge, consisting of a fibre-containing planar structure, wherein on the one hand, polymer from the intermediate layer (6) consisting of PVC-free polymer and on the other hand, polymer from the PVC-free polymer layer (5) is pressed into the fibre structure of the central layer (7) acting as an adhesive bridge.

5. The web-type flexible planar material according to Claim 1, 2 or 3, **characterised in that** the fibre-containing planar structure consists of textile or/and mineral fibres which are ordered or disordered therein.

6. The web-type flexible planar material according to Claim 1, 2, 4 and 5, **characterised in that** the patterning of the planar material consists of a grid-shaped or partly planar coating (3) produced in the printing method comprising organic or/and inorganic dye pigments contained in a thermoplastic binding agent on an inner surface (4) of the base layer (1) or the central layer (7).

7. The web-type flexible planar material according to Claim 1 to 6, **characterised in that** the base layer (1) consisting of a fibre-containing planar structure is constructed as an adhesive bridge between the polymer layer (5) of the planar material (1; 5) or the intermediate layer (6) of the planar material (1; 5; 6) and a bedding plane (2) of the floor covering.

8. The web-type flexible planar material according to Claim 3 to 7, **characterised in that** between two homogeneous PVC-free polymer layers (3; 6) not capable of bonding there is provided a planar central layer (7), predominantly consisting of fibre material, which is designed to serve as an adhesive bridge.

9. The web-type flexible planar material according to Claim 2, 3 to 8, **characterised in that** the planar central layer (7) which serves as an adhesive bridge, consisting predominantly of fibre material, provided between two homogeneous PVC-free polymer layers (3; 6) not capable of bonding is constructed as a support for the patterning consisting of single- or multi-coloured motifs.

10. A method for manufacturing a heterogeneous planar material, consisting of at least one homogeneous synthetic material layer containing no halogen compounds and a base layer constructed as a forming layer and/or as an adhesive bridge to a bedding plane and consisting of fibre material, **characterised in that** a polymer is melted, a planar structure consisting of a film of molten polymer (5' or 6') having a defined thickness is produced from this polymer melt by means of a shaping device (12), and said planar structure in the state of the thermoplastic melt (5' or 6') together with the base layer (1), preferably consisting of non-woven fabric and having no pattern or provided with a pattern on the inner surface (4) facing the thermoplastic polymer planar structure (5 or 6), serving as an adhesive bridge to the bedding plane (2), or a central layer (7) consisting predominantly of non-woven fabric, is inserted in a jointing slot (9) of a pressing tool consisting of at least two jointing means (10; 11) and under the action of a linear or planar pressing force exerted on the base layer (1) or on the central layer (7) and at the same time on the polymer planar structure (5 or 6) in the state of the polymer melt (5' or 6'), produced by pressing the fibrous base layer (1) or the fibrous central layer (7) into the film-like planar-shaped thermoplastic polymer melt (5' or 6'), there is produced a form-locking adhesive bond which is then cooled, wherein the polymer melt (5') consists of a mixture of one or several olefin components and one or several thermoplastic elastomer components and the molecular groups of the material components form a penetration network in which the thermoplastic elastomer components are contained as the discontinuous phase and the olefin components are contained as the continuous phase in the network bond.

11. A method for manufacturing a heterogeneous planar material, consisting of at least two homogeneous synthetic material layers containing no halogen compounds and a base layer constructed as a forming layer and/or as an adhesive bridge to a bedding plane and consisting of fibre material, **characterised in that** a polymer is melted, a planar structure consisting of a film of molten polymer (6') having a defined thickness is produced from this polymer melt by means of a shaping device (12), and said planar structure in the state of the polymer thermoplastic melt together with the base layer (1), preferably consisting of non-woven fabric and having no pattern or provided with a pattern on the inner surface (4) facing the surface of the polymer melt, is inserted in a jointing slot (9) of a pressing tool consisting of at least two jointing means (10; 11) and under the action of a linear or planar pressing force exerted on the base layer (1) and on the polymer planar structure (6) produced by pressing the fibrous base layer (1) into the surface of the thermoplastic polymer planar structure, there is produced a form-locking adhesive bond and this is then provided with another polymer layer (5) by the same procedure wherein the second polymer layer in the state of the thermoplastic melt (5') is applied to the first in the thermoplastic state and this adhesive bond is then cooled, wherein the polymer melt (5') consists of a mixture of one or several olefin components and one or several thermoplastic elastomer components and the molecular groups of the material components form a penetration network in which the thermoplastic elastomer components are contained as the discontinuous phase and the olefin components are contained as the continuous phase in the network bond.

12. A method for manufacturing a heterogeneous planar material, consisting of at least two homogeneous synthetic material layers containing no halogen compounds and a base layer constructed as a forming layer and as an adhesive bridge to a bedding plane and consisting of fibre material, **characterised in** the first homogeneous PVC-free film-like polymer layer is produced in a known fashion as an intermediate layer (6) from a polymer melt and this planar shaped melt (6') is joined in a form-locked fashion, on the one hand to a non-printed base layer (1) serving as an adhesive bridge to the bedding plane (2) and on the other hand, to a fibrous and shapable central layer (7) serving as an adhesive bridge between an intermediate layer (6) and a wearing layer (5), which consists of non-joinable polymers, by means of jointing means (10; 11) which exerts a pressing force, wherein on the fibrous central layer (7) constructed as an adhesive bridge there is then formed another homogeneous wearing layer (5) consisting of PVC-free polymers which is produced by the same procedure from a polymer melt (5'), is applied in the state of the thermoplastic melt (5') and is joined in a form-locked fashion to this adhesive bridge by means of jointing means (10; 11) which exert a pressing force and this adhesive bond is then cooled, wherein the polymer melt (5') consists of a mixture of one or several olefin components and one or several thermoplastic elastomer components and the molecular groups of the material components form a penetration network in which the thermoplastic elastomer components are contained as the discontinuous phase and the olefin components are contained as the continuous phase in the network bond.

13. A method for manufacturing a heterogeneous planar material, consisting of at least two homogeneous synthetic material layers containing no halogen compounds and a base layer constructed as a forming layer and as an adhesive bridge to a bedding plane and consisting of fibre material, **characterised in that** in a separate method a form-locking adhesive bond is produced between an imprinted central layer (7) serving as an adhesive bridge and a wearing layer (5) shaped in a known fashion to form a planar structure from a melt (5') consisting of a homogeneous PVC-free polymer under the action of a force exerted by jointing means (10; 11) on the central layer (7) and on the polymer wearing layer (5) in the thermoplastic state of the melt (5'), and this two-layer adhesive bond first formed from the wearing layer (5) and the central layer (7) serving as an adhesive bridge between two non-joinable polymer layers (5; 6) is then supplied together with a base layer (1) serving as an adhesive bridge to the bedding plane (2) to a jointing slot (9) of a pressing tool consisting of at least two jointing means (10; 11), wherein at the same time, a polymer planar structure in the state of the thermoplastic melt (6') consisting of a film-like polymer melt produced in a known fashion from a polymer melt (6'), is inserted between the two-layer adhesive bond and the fibrous base layer (1), wherein between this and the central layer (7) of the adhesive bond on the one hand and the base layer (1) on the other hand, there is formed a form-locking bond, wherein the polymer melt (5') consists of a mixture of one or several olefin components and one or several thermoplastic elastomer components and the molecular groups of the material components form a penetration network in which the thermoplastic elastomer components are contained as the discontinuous phase and the olefin components are contained as the continuous phase in the network bond.

14. The method for manufacturing a heterogeneous planar material according to Claims 10 to 13, **characterised in that** before being fed into the jointing slot (9) between two jointing means (10; 11) provided for this purpose, the base layer (1) or the central layer (7) is imprinted with a grid-shaped or partly planar pattern consisting of coloured motifs in a printing method using organic or/and inorganic dye pigments mixed in a thermoplastic polymer as binding agents.

15. The method for manufacturing a heterogeneous planar material according to Claims 10 to 13, **characterised in that** the base layer (1) or the central layer (7) is imprinted with a single-colour or multi-colour pattern consisting of motifs in a rotary intaglio printing method or in a rotary screen printing method or in a thermal printing method.

16. The method for manufacturing a heterogeneous planar material according to Claims 10 to 13, **characterised in that** through the polymer layer (5) or intermediate layer (6) fed to the jointing slot (9) in the form of a thermoplastic melt (5' or 6') and consisting of a PVC-free polymer, the base layer (1) or central layer (7) imprinted with a motif is heated and the thermoplastic polymer used as binding agent for the printing inks is melted and is thus integrated into the form-locking join between the fibrous base layer (1) or the central layer (7) and the polymer layer (5) or the intermediate layer (6), imparting adhesion.

## Revendications

1. Matériau flexible plan en forme de bande (1; 5) en matière plastique exempte de composés d'halogène avec une surface (5) résistante à l'usure, en particulier pour un revêtement de sol à dessin, **caractérisé en ce que** le matériau plan (1; 5) présente une structure hétérogène et est constitué de plusieurs, au moins d'une couche de polymère homogène exempt de PVC (5) et d'une couche de base (1) se composant d'une structure plane fibreuse et agissant comme pont d'adhérence, le polymère exempt de PVC de la couche de polymère (5) étant comprimé dans la structure fibreuse de la couche de base (1) et la couche de base (1) qui se compose d'une structure plane fibreuse étant munie d'un dessin défini composé de motifs de couleur, du matériau plan (1; 5) et la couche de polymère (5) étant réalisée comme une couche d'usure (5) transparente ou translucide se composant d'un mélange d'un ou de plusieurs composants d'oléfine et d'un ou de plusieurs composants élastomères thermoplastiques, les groupes de molécules des composants d'oléfine et d'élastomère formant un réseau de pénétration dans lequel les composants élastomères thermoplastiques sont contenus en tant que phase discontinue et les composants d'oléfine en tant que phase continue dans la jonction de réseau.

2. Matériau flexible plan en forme de bande (1; 5; 6) en matière plastique exempte de composés d'halogène avec une surface (5) résistante à l'usure, en particulier pour un revêtement de sol à motif, **caractérisé en ce que** le matériau plan (1; 5; 6) présente une structure hétérogène et est constitué de plusieurs, au moins de deux couches polymères homogènes exemptes de PVC (5; 6) et d'une couche de base (1) se composant d'une structure de surface fibreuse et agissant comme pont d'adhérence, le polymère exempt de PVC de la couche intermédiaire (6) en polymère sans PVC étant comprimé dans la structure fibreuse de la couche de base (1) et la couche de base (1), qui se compose d'une structure de surface fibreuse, étant munie d'un dessin défini composé de motifs de couleur, du matériau de surface (1; 5; 6) et la couche intermédiaire de polymère (6) et la couche d'usure (5) étant réalisées comme des couches transparentes ou translucides, dont la couche intermédiaire transparente (6) est principalement teintée de couleur et la couche terminant la structure hétérogène est réalisée comme une couche d'usure (5) transparente ou translucide se composant d'un mélange d'un ou de plusieurs composants d'oléfine et d'un ou de plusieurs composants élastomères thermoplastiques, les groupes de molécules des composants d'oléfine et d'élastomère formant un réseau de pénétration dans lequel sont contenus les composants élastomères thermoplastiques en tant que phase discontinue et les composants d'oléfine en tant que phase continue dans la jonction de réseau.

3. Matériau flexible plan en forme de bande (1; 5; 6) en matière plastique exempte de composés d'halogène avec une surface résistante à l'usure, en particulier pour un revêtement de sol coloré ou structuré de couleur, **caractérisé en ce que** le matériau plan (1; 5; 6) présente une structure hétérogène et est constitué de plusieurs, au moins deux couches polymères homogènes exemptes de PVC et d'une couche de base (1) se composant d'une structure de surface fibreuse et agissant comme pont d'adhérence, la couche intermédiaire (6) étant comprimée dans la structure fibreuse de la couche de base (1) et l'une des couches polymère étant réalisée comme une couche intermédiaire (6) monochrome, structurée en couleur ou à motif et l'autre couche terminant la structure hétérogène du matériau de surface comme une couche d'usure (5) se composant d'un ou de plusieurs composants d'oléfine et d'un ou de plusieurs composants d'élastomère thermoplastique, les molécules des composants d'oléfine et d'élastomère formant un réseau de pénétration dans lequel sont contenus les composants élastomère thermoplastiques en tant que phase discontinue et les composants d'oléfine en tant que phase continue dans la jonction de réseau.

4. Matériau plan flexible en forme de bande selon la revendication 2 et 3, **caractérisé en ce qu'**entre une couche polymère (5) homogène, exempte de PVC non adhérente et une couche intercalaire (6) se composant de polymère exempt de PVC, non adhérente, il est prévu une couche médiane (7) se composant d'une structure fibreuse et réalisée comme pont d'adhérence, d'une part le polymère de la couche intercalaire (6) se composant de polymère exempt de PVC et d'autre part le polymère de la couche polymère (5) sans PVC étant comprimés dans la structure fibreuse de la couche médiane réalisée comme un pont d'adhérence (7).

5. Matériau plan flexible en forme de bande selon la revendication 1, 2 ou 3, **caractérisé en ce que** la structure fibreuse plane se compose de fibres textiles ou minérales ordonnées ou désordonnées.

6. Matériau plan flexible en forme de bande selon la revendication 1, 2, 4 ou 5, **caractérisé en ce que** le dessin de motifs du matériau plan est constitué d'une application (3) de forme quadrillée ou fractionnée réalisée suivant le procédé d'impression, application qui se compose de pigments de couleur organiques et/ou anorganiques contenus dans un liant thermoplastique sur une surface interne (4) de la couche de base (1) ou de la couche médiane (7).

7. Matériau plan flexible en forme de bande selon les revendications 1 à 6, **caractérisé en ce que** la couche de base (1) se composant d'une structure de surface fibreuse est réalisée comme un pont d'adhérence entre la couche de polymère (5) du matériau plan (1; 5) respectivement de la couche intermédiaire (6) du matériau plan (1; 5; 6) et un plan de pose (2) du revêtement de sol.

8. Matériau plan flexible en forme de bande selon les revendications 3 à 7, **caractérisé en ce qu'**entre les deux couches polymères homogènes exemptes de PVC, non adhérentes (3; 6), il est prévu une couche médiane plane (7) se composant essentiellement de matière fibreuse servant de pont d'adhérence.

9. Matériau plan flexible en forme de bande selon les revendications 2, 3 à 8, **caractérisé en ce que** la couche médiane plane (7) se composant essentiellement de matière fibreuse servant de pont d'adhérence, prévue entre les deux couches polymères homogènes exemptes de PVC, non adhérentes (3; 6), est réalisée comme un support pour le dessin se composant de motifs à une ou plusieurs couleurs.

10. Procédé de fabrication d'une matériau plan hétérogène se composant d'au moins une couche de matière plastique homogène exempte de composés d'halogène et d'une couche de base se composant de matière fibreuse réalisée comme pont d'adhérence à un plan de pose et comme couche d'agencement, **caractérisé en ce qu'**un polymère est fondu, à partir de cette masse fondue de polymère, **en ce qu'**il est réalisé par l'intermédiaire d'un dispositif de modelage (12) une structure plane se composant d'une pellicule de masse fondue polymère (5' respectivement 6') et **en ce que** cette structure est introduite à l'état de la masse fondue thermoplastique polymère (5' respectivement 6') simultanément avec la couche de base (1) servant de pont d'adhérence au plan de pose (2), avec ou sans dessin sur la surface interne (4) tournée vers la structure de surface (5 respectivement 6) polymère thermoplastique et se composant de préférence d'un non tissé fibreux ou avec une couche médiane (7) se composant principalement de non tissé fibreux dans une fente de jonction (9) d'une presse se composant d'au moins deux moyens de jonction (10; 11) et sous l'action d'une force de pression générée par ligne ou en surface, exercée sur la couche de base (1) respectivement sur la couche médiane (7) et simultanément sur la structure de surface polymère (5 respectivement 6) dans l'état de la masse fondue de polymère (5' respectivement 6'), il est réalisé par pression de la couche de base fibreuse (1) respectivement de la couche médiane fibreuse (7) dans la masse fondue polymère thermoplastique plane (5' respectivement 6') formant une pellicule, une adhérence par concordance de forme, qui est ensuite refroidie, la masse fondue polymère (5') se composant d'un mélange d'un ou de plusieurs composants d'oléfine et d'un ou de plusieurs composants élastomères thermoplastiques et les groupes de molécules des composants formant un réseau de pénétration dans lequel sont contenus les composants élastomères thermoplastiques en tant que phase discontinue et les composants d'oléfine en tant que phase continue dans la jonction de réseau.

11. Procédé de fabrication d'une matériau plan hétérogène se composant d'au moins une couche de matière plastique homogène exempte de composés d'halogènes et d'une couche de base se composant de matière fibreuse réalisée comme pont d'adhérence à un plan de pose et comme couche d'agencement, **caractérisé en ce qu'**un polymère est fondu, **en ce qu'**à partir de cette masse fondue polymère, il est réalisé par l'intermédiaire d'un dispositif de modelage (12) une structure plane d'une épaisseur définie se composant d'une pellicule de masse fondue polymère (6') et **en ce que** cette structure est introduite à l'état de la masse fondue thermoplastique polymère simultanément avec la couche de base (1) composée de préférence d'un non tissé fibreux, munie ou non d'un dessin sur la surface interne (4) tournée vers la surface de masse fondue dans une fente de jonction (9) d'une presse se composant d'au moins deux moyens de jonction (10; 11) et sous l'action d'une force de pression générée par ligne ou en surface et exercée sur la couche de base (1) ainsi que sur la structure plane polymère (6), il est réalisé par pression de la couche de base fibreuse (1) dans la surface de la structure de surface polymère thermoplastique, une adhérence par concordance de forme, et **en ce que** cette adhérence est munie ensuite dans la même technique de procédé d'une couche de polymère supplémentaire (5), la seconde couche de polymère étant appliquée à l'état de la masse fondue thermoplastique (5') sur la première couche et **en ce que** cette adhérence est ensuite refroidie, la masse fondue polymère (5') se composant d'un mélange d'un ou de plusieurs composants d'oléfine et d'un ou de plusieurs composants élastomères thermoplastiques et les groupes de molécules des composants formant un réseau de pénétration dans lequel sont contenus les composants élastomères thermoplastiques en tant que phase discontinue et les composants d'oléfine en tant que phase continue dans la jonction de réseau.

12. Procédé de fabrication d'un matériau plan hétérogène se composant d'au moins deux couches de matière plastique homogène exempte de composés d'halogènes et d'une couche de base se composant de matière fibreuse et réalisée comme pont d'adhérence à un plan de pose et comme couche d'agencement, **caractérisé en ce que** la première couche polymère homogène exempte de PVC en forme de pellicule est réalisée de manière connue en tant que couche intermédiaire (6) d'une masse fondue de polymère et cette masse fondue plane polymère modelée (6') est reliée par concordance des formes d'une part à une couche de base (1) non imprimée servant de pont d'adhérence au plan de pose (2) et d'autre part à une couche médiane (7) agençable, fibreuse servant de pont d'adhérence entre une couche intermédiaire (6) et une couche d'usure (5) qui se compose de polymère non adhérent par des moyens de jonction (10; 11) exerçant une force de compression, sur la couche médiane (7) fibreuse servant de pont d'adhérence, **en ce qu'**il est appliqué ensuite à l'état de la masse fondue thermoplastique une autre couche d'usure (5) homogène se composant de polymère exempt de PVC qui est réalisée dans la même technique de procédé à partir d'une masse fondue polymère (5') et qui est reliée au moyen de moyens de jonction (10; 11) exerçant une force de compression par concordance des formes avec ce pont d'adhérence, et **en ce que** cette adhérence est ensuite refroidie, la masse fondue polymère (5') se composant d'un mélange d'un ou de plusieurs composant oléfines et d'un ou de plusieurs composants élastomères thermoplastiques et les groupes de molécules des composants formant un réseau de pénétration dans lequel sont contenus les composants élastomères thermoplastiques en tant que phase discontinue et les composants d'oléfine en tant que phase continue dans le composite de réseau.

13. Procédé de fabrication d'un matériau plan hétérogène se composant d'au moins deux couches de matière plastique homogène exempte de composés d'halogènes et d'une couche de base se composant de matière fibreuse réalisée comme pont d'adhérence à un plan de pose et comme couche d'agencement, **caractérisé en ce que** dans un procédé séparé, il est réalisé une adhérence par concordance des formes entre une couche médiane (7) imprimée servant de pont d'adhérence et une couche d'usure (5) modelée en une structure plane de manière connue à partir d'une masse fondue (5') se composant d'un polymère homogène exempt de PVC, sous l'action d'une force exercée par des moyens de jonction (10; 11) sur la couche médiane (7) et sur la couche polymère d'usure (5) à l'état thermoplastique de la masse fondue (5') et **en ce qu'**ensuite cette adhérence à deux couches formées auparavant à partir de la couche d'usure (5) et de la couche médiane (7) servant de pont d'adhérence entre deux couches polymères non adhérentes (5; 6) est amenée en même temps qu'une couche de base (1) servant de pont d'adhérence au plan de pose (2), à une fente de jonction (9) d'une presse se composant d'au moins deux moyens de jonction (10; 11), en même temps une structure plane polymère réalisée de manière connue à partir d'une masse fondue de polymère (6') et se composant d'une pellicule de masse fondue de polymère étant introduite à l'état de la masse fondue thermoplastique polymère (6') entre l'adhérence à deux couches et la couche de base fibreuse (1), entre cette couche de base et la couche médiane (7) de l'adhérence d'une part et la couche de base (1) d'autre part, il est établi une liaison par concordance des formes, la masse fondue polymère (5') se composant d'un mélange d'un ou de plusieurs composants d'oléfine et d'un ou de plusieurs composants élastomères thermoplastiques et les groupes de molécules des composants formant un réseau de pénétration dans lequel sont contenus les composants élastomères thermoplastiques en tant que phase discontinue et les composants d'oléfine en tant que phase continue dans la jonction de réseau.

14. Procédé pour la fabrication d'un matériau plan hétérogène selon les revendications 10 à 13, **caractérisé en ce qu'**avant leur amenée dans la fente de jonction (9) entre deux moyens de jonction (10; 11) prévus à cet effet, la couche de base (1) ou la couche médiane (7) sont imprimées dans un procédé d'impression en utilisant des pigments de couleur organiques et/ou anorganique mélangés dans un polymère thermoplastique en tant que liant avec un dessin se composant de motifs couleurs de forme quadrillée ou fractionnée.

15. Procédé pour la fabrication d'un matériau plan hétérogène selon les revendications 10 et 13, **caractérisé en ce que** la couche de base (1) ou la couche médiane (7) est imprimée dans un procédé d'héliogravure rotative ou dans un procédé de sérigraphie rotative ou par thermoimpression avec un dessin à une ou plusieurs couleurs se composant de motifs.

16. Procédé pour la fabrication d'un matériau plan hétérogène selon les revendications 10 à 13, **caractérisé en ce que** par la couche de polymère (5) ou couche intermédiaire (6) se composant d'un polymère exempt de PVC et amenée à la fente de jonction (9) sous forme d'une masse fondue (5' ou 6') thermoplastique, la couche de base (1) ou couche médiane (7) imprimée d'un motif est échauffée et de ce fait, le polymère thermoplastique utilisé pour les couleurs d'impression en tant que liant est fondu et est ainsi intégré dans la liaison par concordance des formes entre la couche de base fibreuse (1) respectivement la couche médiane (7) et la couche de polymère (5) respectivement la couche intermédiaire (6) en établissant l'adhérence.
